# EUROPEAN PATENT SPECIFICATION

(11) **EP 1 081 584 B1**
(45) Date of publication and mention of the grant of the patent: **17.10.2007**
(21) Application number: 00106455.9
(22) Date of filing: 24.03.2000
(51) Int. Cl.: G06F 3/06

(54) **Information processing apparatus and storage medium control method**
Informationsverarbeitungsgerät und Steuerungsverfahren für Speichermedium
Appareil de traitement d'informations et procédé de commande de support d'enregistrement

(30) Priority: 30.08.1999 JP 24358099
(43) Date of publication of application: 07.03.2001
(73) Proprietor: KABUSHIKI KAISHA TOSHIBA, Kawasaki-shi, Kanagawa-ken 210-8520 (JP)
(72) Inventor: Oohara, Minoru, 1-1 Shibaura 1-chome Minato-ku Tokyo 105 (JP); Katsuse, Yoshihide, 1-1 Shibaura 1-chome Minato-ku Tokyo 105 (JP); Okuhata, Keiji, 1-1 Shibaura 1-chome Minato-ku Tokyo 105 (JP)
(74) Representative: Henkel, Feiler & Hänzel

(56) References cited:
- US-A- 4 456 971
- US-A- 5 396 617

## Description

The present invention relates to an information processing apparatus employing a semiconductor memory control interface and another storage medium control interface such as a floppy disk drive interface (FDD interface), and a storage medium control method.

In general, an information processing apparatus such as personal computer is configured so as to use a floppy disk (FD), for example, as a portable read/write enable storage medium. Further, in recent years, in an information processing apparatus, it is required to use a non-volatile semiconductor memory as a small-sized, light-weight, read/write enable storage medium.

In such information processing apparatus, in order to use a portable semiconductor memory, it is required to provide a semiconductor memory control interface. For that purpose, it is required to provide a new signal line for connecting the semiconductor memory control interface.

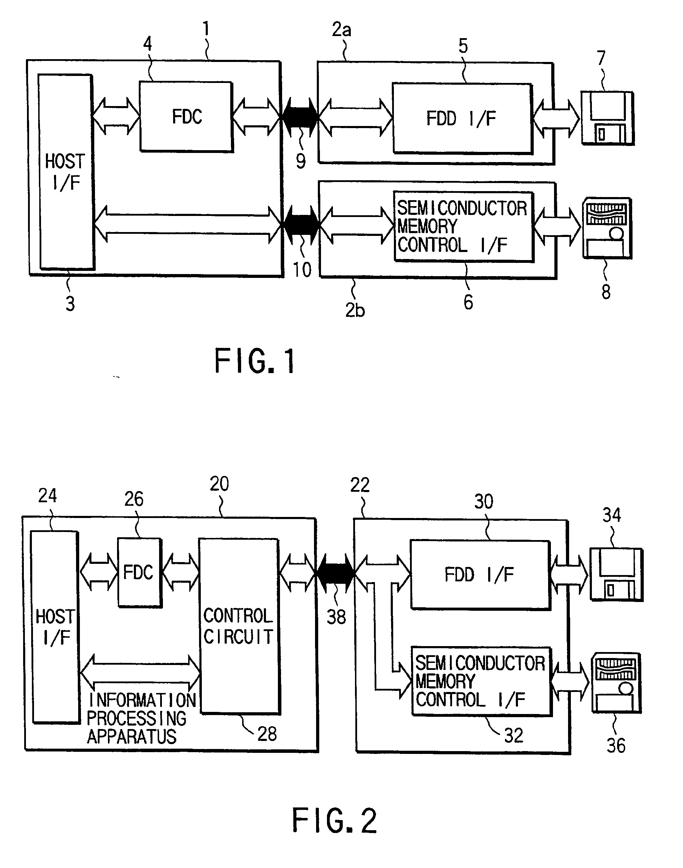

In FIG. 1, there is shown an example of a configuration in which a semiconductor memory control interface is connected in a conventional information processing apparatus such as personal computer. An information processing apparatus 1 shown in FIG. 1 (only partially shown) is connected to a device (drive or the like) 2a having an FDD interface 5; and a device (unit or the like) 2b having a semiconductor memory control interface 6.

At a host interface 3 of the information processing apparatus 1, there is provided a floppy disk controller (FCD) 4 for controlling the FDD interface 5. This controller is connected to the FDD interface 5 via an FDD interface signal line (cable, connector or the like).

In such conventional information processing apparatus 1, in addition to a signal line for connecting the FDD interface 5, a signal line for connecting the semiconductor memory control interface 6 is required to provide a semiconductor memory control interface 6. Therefore, it directly causes the increased number of parts, leading to an increased cost.

US 4 456 971, which has been used for wording the precharacterizing part of claim 1, discloses a semiconductor random access memory system for use in a processor system which is adapted to operate with a magnetic disc storage device, such as the so-called floppy-disc store. A semiconductor RAM has data input/output terminals and address terminals for writing data into or reading data out of a storage location that is addressed by an address signal supplied to the address terminals. Track and sector address registers are coupled to the processor system for receiving and storing the typical track and sector address signals normally generated in the system. A counter counts timing pulses to produce a changing count signal, which timing pulses are generated by a timing control circuit. An address synthesizer is coupled to the track and sector address registers and also to the counter for synthesizing a RAM address signal from the stored track and sector address signals as well as the count signal and for supplying this RAM address signal to the RAM address terminals to access the RAM storage location which is addressed thereby. Thus, when the processor system generates the typical track and sector address signals normally used with a floppy disc store, such track and sector address signals are used to address a typical semiconductor RAM.

US 5 396 617 discloses a write-read unit in the form of a compact hybrid drive for combination or alternative use of plugable, removable, encapsulated flat modules equipped with semiconductors (IC cards) and with one or several drives for rotating storage media, such as drives for floppy disks, hard disks, compact disks as well as magneto-optic drives to be connected to electronic devices, such as electronic data processing machines, printers or controls. The selection of the write-read unit is effected via an integrated electronics either joint or separate for the storage media. Existing electronic devices can be extended without requiring additional space in order to shift complex data processing transactions onto the IC card, thus relieving the central processing unit.

Accordingly, it is an object of the present invention to provide an information processing apparatus capable of simplifying a configuration of the information processing apparatus having a semiconductor memory control information and capable of being provided inexpensively, and a storage medium control method.

The above object is achieved by means of an information processing apparatus and a corresponding method as recited in claims 1 and 8, respectively. he dependent claims are directed to further advantageous aspects of the invention.

According to one aspect of the present invention, there is provided an information processing apparatus using a semiconductor memory control interface and a storage medium control interface different from the semiconductor memory control interface, the apparatus comprising: a signal line shared by the semiconductor memory control interface and the storage medium control interface; means for storing a state indicating which one of the storage medium control interface and the semiconductor memory control interface holds a privilege of using the signal line; and means for controlling a connection between the signal line and any one of the interfaces to be electrically disconnected according to a state stored by the state storage means.

The apparatus may further comprise: command storage means for writing a command for setting the privilege of using the signal line to any one of the storage medium control interface and the semiconductor memory control interface; and means for setting the privilege of using the signal line by command writing into the command storage means.

In the apparatus, storage medium control interface and the semiconductor memory control interface may use select signals assigned to routes that do not coincide with each other over the signal line.

The apparatus may further comprise: access control means for checking whether the storage medium control interface uses the signal line by referring a state stored in the state storage means before providing access to the semiconductor memory control interface, and causing the system to wait until the signal line is released when the storage medium control interface uses the signal line.

In the apparatus, the access control means may check a use state of the signal line periodically when it is checked that the storage medium control interface uses the signal line.

In the apparatus, the semiconductor memory control interface and the storage medium control interface may be housed in a single device. The device may have a shared connector for connecting to the shared signal line. The device may be capable of inserting a memory card and a floppy disk therein.

According to another aspect of the present invention, there is provided a storage medium control method in an information processing apparatus using a semiconductor memory control interface and a storage medium control interface different from the semiconductor memory control interface, the method comprising: storing a state indicating which one of the storage medium control interface and the semiconductor memory control interface holds a privilege of using a signal line, the signal line being shared by the semiconductor memory control interface and the storage medium control interface; and electrically disconnecting a connection between the signal line and any one of the interfaces according to the state stored.

The method may further comprise setting the privilege of using the signal line to any one of the storage medium control interface and the semiconductor memory control interface.

The method may further comprising assigning select signals used in the storage medium control interface and the semiconductor memory control interface to routes that do not coincide with each other over the signal line.

The method may further comprise: checking whether the storage medium control interface use the signal line by referring to the stored state before providing access to the semiconductor memory control interface; and causing the system to wait until the signal line is released when the storage medium control interface uses the signal line.

The method may further comprise checking a use state of the signal line periodically when it is checked that the storage medium control interface uses the signal line.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing an example of a configuration in which a semiconductor memory control interface is connected in a conventional information processing apparatus;
FIG. 2 is a block diagram showing a system configuration of an information processing apparatus according to the present embodiment;
FIG. 3 is a view showing an appearance of an interface unit for a storage medium;
FIG. 4 is a view showing a detailed configuration of a control circuit provided at the information processing apparatus;
FIGS. 5A and 5B are diagrams showing a specification example of a command to be written in a status register and a command register;
FIG. 6 is a diagram showing an example of pin assignment for rendering an FDD interface and a semiconductor memory control interface shearing a signal line;
FIG. 7 is a flowchart for illustrating operations for checking the privilege of using a signal line before using a semiconductor memory control interface, and setting the privilege of use for the semiconductor memory control interface; and
FIGS. 8A and 8B are diagrams for illustrating data transfer processing between recording media.

Hereinafter, preferred embodiments of the present invention will be described with reference to the accompanying drawings.

FIG. 2 is a block diagram showing a system configuration of an information processing apparatus according to the present embodiment. A information processing apparatus 20 in the present embodiment (only partially shown) is configured so as to employ a floppy disk (FD) and a semiconductor memory as a portable storage medium by a storage medium interface unit (e.g., drive) 22.

As shown in FIG. 2, the information processing apparatus 20 in the present embodiment includes a host interface 24, a floppy disk control (FDC) 26, and a control circuit 28. In addition, the storage medium interface unit 22 includes an FDD interface 30 for employing a floppy disk 34; and a semiconductor memory control interface 32 for employing a semiconductor memory ("smart medium" or the like) 36. A storage medium other than FDD can be, of course, employed, and control information for such storage medium is provided.

The host interface 24 is directed to an interface with an information processing apparatus control system, and the FDC 26, control circuit 28 or the like is connected to this interface.

The FDC 26 controls an FDD interface 30 through the control circuit 28 under the information processing apparatus control system.

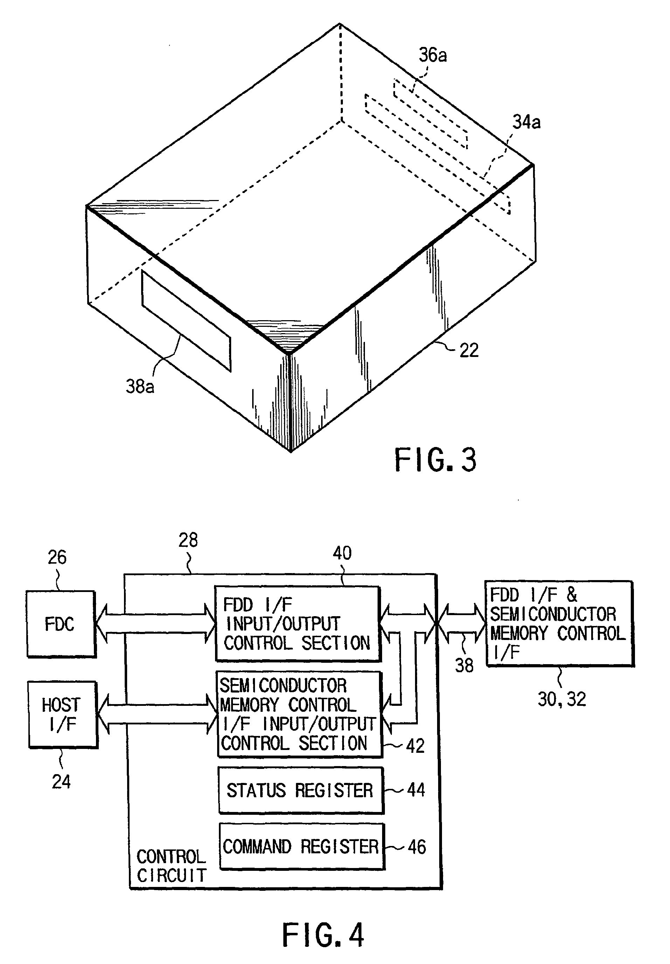

The control circuit 28 performs control for using the FDD interface 30 provided at the storage medium interface unit 22 and the semiconductor memory control interface 32 in a same signal line 38 (cable, connector or the like) (a detailed configuration is shown in FIG. 4).

The configuration shown in FIG. 2 assumes connection of the storage medium interface unit 22 in which the FDD interface 30 and the semiconductor memory control interface 32 are integrated with each other. However, this integration is not mandatory, and a configuration in which the signal line 38 can be shared will suffice.

FIG. 3 shows an appearance of a storage medium interface unit 22. As shown in FIG. 3, an insert port 34a for the floppy disk 34 and an insert port 36a for the memory card ("smart media") 36 are provided at one face of the unit 22. A connector 38a corresponding to the aforementioned shared signal line 38 is provided as one of features of the present invention. In this way, the unit 22 houses interface groups 30 and 32 corresponding to different media in a single drive, and is configured to provide only one shared connector 38a that these interface groups 30 and 32 use.

In FIG. 4, there is shown a detailed configuration of a control circuit 28 provided at the information processing apparatus 20. As shown in FIG. 4, the control circuit 28 includes an FDD interface input/output control section 40; a semiconductor memory control interface input/output control section 42; a status register 44; and a command register 46. The control circuit 28 performs exclusive control for setting the privilege of use for only one side in order to use the FDD interface 30 and the semiconductor memory control interface 32 in the same signal line 38.

The FDD interface input/output control section 40 controls the FDD interface 30 via the signal line 38 under the control of FDC 26. In the case where the privilege of using the signal line 38 is assigned to the semiconductor memory control interface 32, it is possible to electrically disconnect the signal line 38 (to establish high-impedance state).

The semiconductor memory interface input/output control section 42 controls the semiconductor memory control interface 32 via the signal line 38 under the control of the host interface 24. In the case where the privilege of using the signal line 38 is assigned to the FDD interface 30, it is possible to electrically disconnect the signal line 38 (to establish high-impedance state).

The FDD interface input/output control section 40 and the semiconductor memory control interface input/output control section 42 exclusively function each other. In the case where one of them obtains the privilege of using the signal line 38, the other disconnects the signal line 38. This exclusive function is controlled by a command to be written in the command register 46.

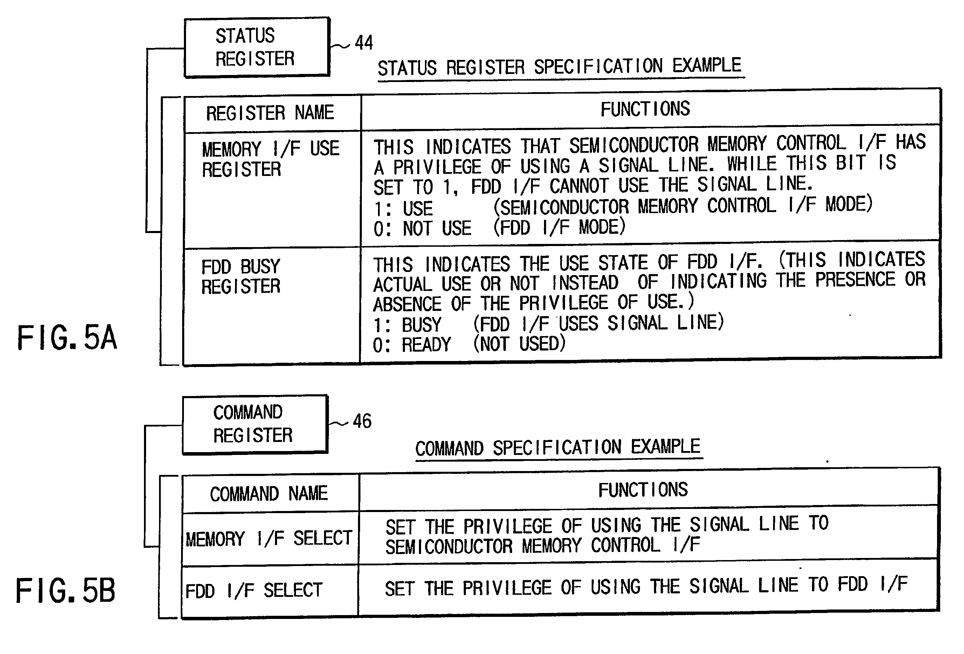

The connector register 46 is adopted to write a command for assigning the privilege of using the signal line 38 to the FDD interface 30 or the semiconductor memory control interface 32. A specification example of a command to be written in the command register 46 is shown in FIG. 5B.

FIGS. 5A and 5B show the details on the specification example of the status register 44 and the specification example of the command written in the command register 46.

The status register 44, as shown in FIG. 5A, includes a "Memory I/F Use Register" and an "FDD Busy Register". The "Memory I/F Use Register" indicates that the privilege of using the signal line 38 is present in the semiconductor memory control interface 32. Here, in the case of setting to "1", it indicates that the semiconductor memory control interface 32 have the privilege of use (semiconductor memory control interface mode). In the case of setting to "0", it indicates that the FDD interface 30 has the privilege of use (FDD interface mode). While the "Memory I/F Use Register" is set to "1", the FDD interface 30 cannot use the signal line 38. The "FDD Busy Register" indicates the use state of the FDD interface (whether or not the interface actually uses the signal line, instead of indicating whether or not the interface has the privilege of use). When "1" is set, it indicates that the FDD interface 30 uses the signal line 38. When "0" is set, it indicates that the FDD interface 30 does not use the signal line 38.

The command written in the command register 46, as shown in FIG. 5B, includes a "Memory I/F Select" and a "FDD I/F Select". The "Memory I/F Select" is intended for setting the privilege of using the signal line 38 to the semiconductor memory control interface 32. The "FDD I/F Select" is intended for setting the privilege of using the signal line 38 to the FDD interface 30. When the "FDD Busy Register" of the status register 44 is set to "1", even if the "Memory I/F Select" command is issued, this command issuance is assumed to be invalid.

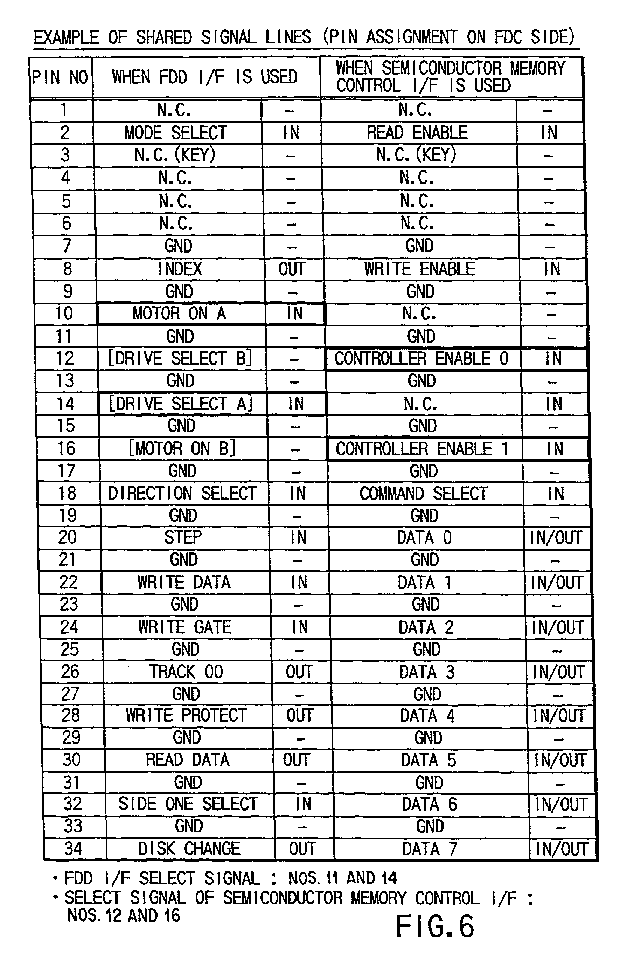

In FIG. 6, there is shown an example of pin assignment for rendering the FDD interface 30 and the semiconductor memory control interface 32 sharing the signal line 38. In an example shown in FIG. 6, a 34-pin cable for FDD interface connection is employed for connection of the semiconductor memory control interface 32. As shown in FIG. 6, select signals used in the FDD interface 30 and the semiconductor memory control interface 32 are assigned to pins that do not coincide with each other, and signals other than the select signals are assigned to common signal lines.

That is, when the semiconductor memory control interface 32 is used, a 12-pin "CONTROLLER ENABLE0" and a 16-pin "CONTROLLER ENABLE1" are employed as select signals, which are different from a 10-pin "MOTOR ON A" and a 14-pin "DRIVE SELECT A". In the latest personal computers, only one floppy disk drive (FDD) is generally provided. When the FDD interface 30 is used, the 12-pin and 16-pin signals assigned as select signals of the second FDD are employed as select signals during use of the semiconductor memory control interface 32, whereby preventing duplication of output signals from occurring due to the select signals being input to both the interfaces simultaneously.

Now, an operation of the present embodiment will be described here.

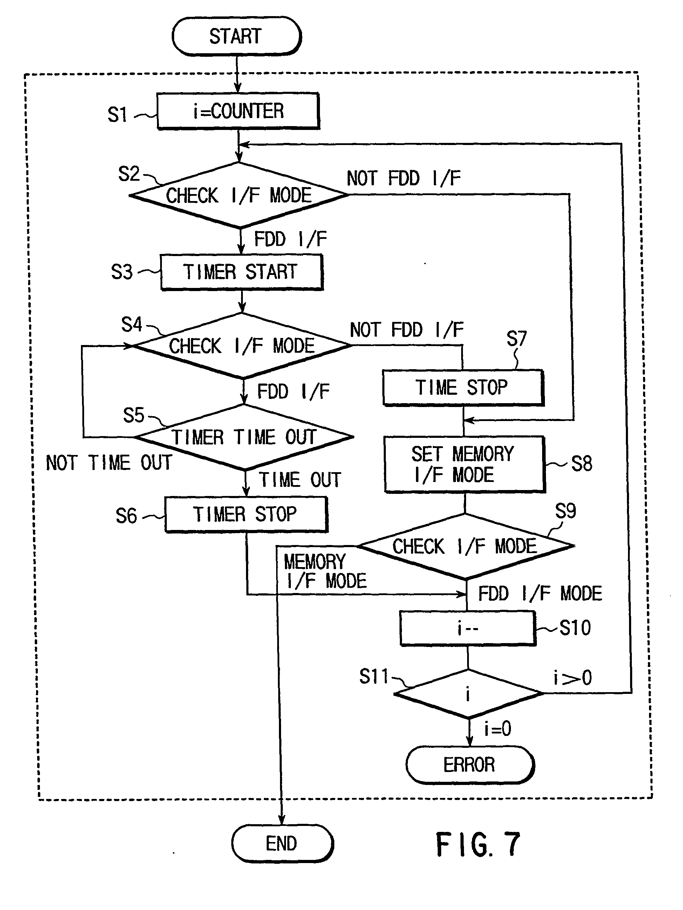

Prior to using the semiconductor memory control interface 32 in a system shown in FIG. 2, an information processing apparatus control system executes a semiconductor memory control interface access program, whereby the privilege of using the signal line 38 is checked in accordance with the procedure shown in the flowchart of FIG. 7, and the privilege of using the line for the semiconductor memory control interface 32 is set.

First, while in the FDD interface mode, the count of retrying processing for setting the privilege of using the signal line 38 to the semiconductor memory control interface 32 is set to a retry counter (step S1). Here, the retry counter value is assumed to have been set to "i".

Next, the "FDD Busy Register" of the status register 44 is checked (step S2). It is checked whether or not the FDD interface 30 uses the signal line 38. In the "FDD Busy Register", when access to FD 34 is provided by FDC 26 controlling the FDD interface 30, "1" is set. In the other case, "0" is set. When the "FDD Busy Register" is set to "1", the "Memory I/F Use Register" is set to "0", which indicates a FDD interface mode.

Here, when it is checked that the FDD interface 30 uses the signal line 38 by setting of the FDD Busy Register" to 1, the semiconductor memory control interface mode cannot be set at this stage. A timer for checking "FDD Busy Register" for a predetermined period of time is started (step S3). During this period, the "FDD Busy Register" is checked, and the system waits until the signal line 38 is released (steps S4 and S5).

In the case where the FDD interface 30 does not release the signal line 38 within a predetermined period of time, and "FDD Busy Register" remains "1", the timer is stopped, and the value "i" of the retry counter is decremented by 1 (step S10). When the value is not 0 (step S11), processing returns to step S2, and the processing similar to the aforementioned processing is repeatedly executed.

On the other hand, when the "FDD Busy Register" is set to "0" within a predetermined period of time, and it is checked that the signal line 38 has been released (step S4), the timer is stopped (step S7). Then, the "Memory I/F Select" command is issued for setting the privilege of using the signal line 38 to the semiconductor memory control interface 32 (step S8).

Thereafter, the "Memory I/F Use Register" is checked to see that the privilege of using the signal line 38 is set to the semiconductor memory control interface 32, that is, the "Memory I/F Use Register" is set to "1" (step S9).

This is because after checking in steps S2 and S4, while the "Memory I/F Select" command is issued in step S8, there is a possibility that FDC 26 starts using the signal line 38 in order to access to the FDD interface 30. Here, when the "Memory I/F Use Register" is set to "0", that is, when it is checked that the FDD interface mode is in progress, the value i of the retry counter is decremented by 1 (step S10). If the value is not set to 0 (step S11), processing returned to step S2, and the processing similar to the aforementioned process is repeatedly executed.

In addition, in step S11, when the value i of the retry counter is set to 0, it is assumed that an error occurred, and processing is cancelled.

In this case, there has been described a case in which the privilege of using the signal line 38 is set to the semiconductor memory control interface 32, and the semiconductor memory control interface 32 (semiconductor memory 36) is used. Similarly, the "FDD I/F Select" command is written into the command register 46, whereby the FDD interface mode is set (the "Memory I/F Use Register" is set to 0"), and the privilege of using the signal line 38 can be set to the FDD interface 30.

In this way, the status register 44 is provided at the control circuit 28, whereby making it possible to check which one of the FDD interface 30 and the semiconductor memory control interface 32 has the privilege of using the signal line 38 by referring to this status register 44. While the FDD interface 30 or the semiconductor memory control interface 32 uses the signal line 38, the signal line 38 is exclusively disconnected so that the FDD interface input/output control section 40 and the semiconductor memory control interface input/output control section 42 is free from being influenced by signals, whereby the same signal line 38 can be shared. In addition, select signals employed in both of the FDD interface 30 and the semiconductor memory control interface 32 are assigned to pins not used each other. Thus, even if the same signal line 38 is shared, the select signals are not duplicated.

In addition, prior to using the semiconductor memory control interface 32, the semiconductor memory control interface access program is executed, whereby the use state of the signal line 38 of the FDD interface 30 is checked, and simultaneous use of the signal line 38 by the FDD interface 30 and the semiconductor memory control interface 32 is prevented. In addition, when an attempt is made to use the semiconductor memory control interface 32, in the case where the FDD interface 30 uses the signal line 38, the use state of the signal line 38 is periodically checked by using the timer until use of the signal line 38 has been completed. Thus, arbitration of the FDD interface 30 and the semiconductor memory control interface 32 can be achieved by means of the semiconductor memory control interface access program.

In this case, there has been described a case in which the signal line 38 is shared by the FDD interface 30 and the semiconductor memory control interface 32. The present invention is applicable to a case in which a signal line is shared by the other control interface connected via an ATAPI (AT Attachment Packet Interface) cable, connector or the like, and the semiconductor memory control interface 32.

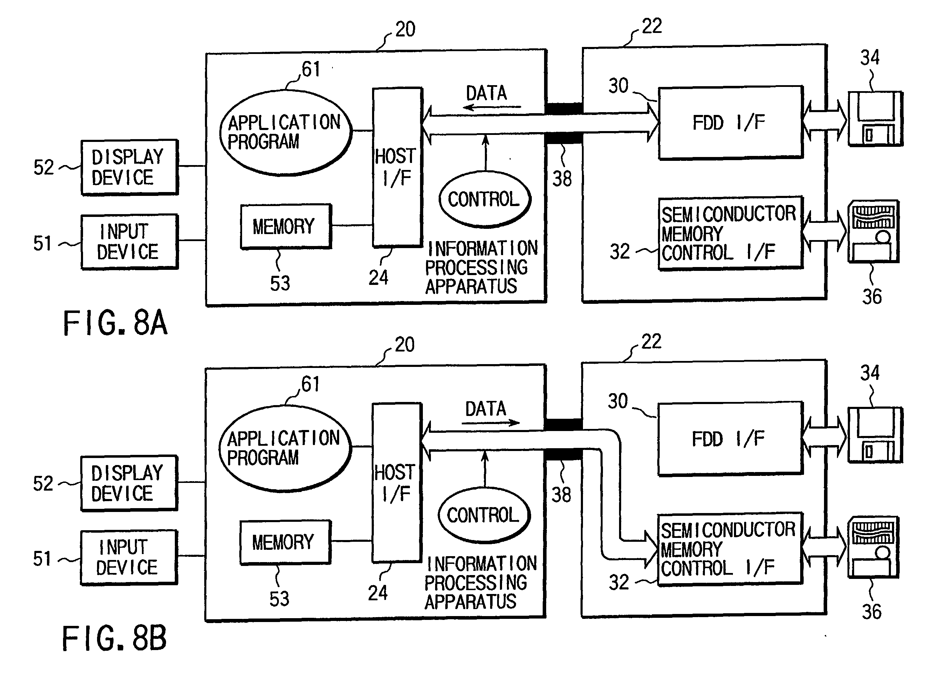

Now, an example when data is transferred between recording media will be described with reference to FIGS. 8A and 8B.

An application 61 is provided on the information processing apparatus 20 side. The user can grasp a variety of devices connected to the system through this application 61, can move, copy and delete data between devices (a folder or a file).

Here, a case in which data is transferred from a floppy disk 34 connected to an FDD interface 30 to a memory card 36 connected to a semiconductor memory control interface 32 will be described.

The user employs an input device 51 while looking at a screen that the application 61 provides on a display device 52, thereby providing access to the floppy disk 34 inserted into the FDD. In this way, the identification names of various data stored in the floppy disk 34 are displayed, and thus, the user specify data to be transferred from among these items of data, and makes a "cutting" operation. Then, the user provides access to the memory card 36 that is a transfer destination, and makes a "pasting" operation. In this way, the application 61 executes the following data transfer processing.

First, as shown in FIG. 8A, the application 61 fetches the data specified in the floppy disk 34 on the information processing apparatus 20 side through a signal line 38, and temporarily saves it in a predetermined storage area on a memory 53. At this time, the privilege of using the signal line 38 is assigned to the FDD interface 30, and a connection between the semiconductor memory interface 32 and the signal line 38 is electrically disconnected by means of a control circuit 28 (FIG. 2).

Next, as shown in FIG. 8B, the application 61 transfers the data temporarily saved in the memory 53 to the memory card 36 through the signal line 38. At this time, the privilege of using the signal line 38 is assigned to the semiconductor memory control interface 32, and a connection between the FDD memory interface 30 and the signal line 38 is electrically disconnected by means of a control circuit 28 (FIG. 2).

Thus, when data is transferred between the recording media, the privilege of using the signal line 38 is adequately switched, and data is smoothly transferred through a shared signal line.

As has been described above in detail, according to the present invention, exclusive control is performed for employing a signal line used in an existing storage medium control interface for use in a semiconductor memory control interface, and a signal line that has been used exclusively for the existing storage medium is shared with the semiconductor memory control interface, whereby making it possible to simplify a configuration of an information processing apparatus having a semiconductor memory interface, and providing such apparatus inexpensively.

## Claims

1. An information processing apparatus using a semiconductor memory control interface (32) and a storage medium control interface (30) different from the semiconductor memory control interface (32), the apparatus comprising:
a signal line (38) shared by the semiconductor memory control interface (32) and the storage medium control interface (30);
means (44) for storing a state indicating which one of the storage medium control interface (30) and the semiconductor memory control interface (32) holds a privilege of using the signal line (38); and
means (28) for controlling a connection between the signal line (38) and any one of the interfaces (30, 32) to be electrically disconnected according to a state stored by the state storage means;
**characterized by** further comprising:
access control means (28) for checking whether the storage medium control interface (30) uses the signal line (38) by referring a state stored in the state storage means (44) before providing access to the semiconductor memory control interface (32), and causing the system to wait until the signal line (38) is released when the storage medium control interface (30) uses the signal line (38).

2. The apparatus according to claim 1, **characterized by** further comprising:
command storage means (46) for writing a command for setting the privilege of using the signal line (38) to anyone of the storage medium control interface (30) and the semiconductor memory control interface (32); and
means (40, 42) for setting the privilege of using the signal line (38) by command writing into the command storage means.

3. The apparatus according to claim 1, **characterized in that** the storage medium control interface (30) and the semiconductor memory control interface (32) use select signals assigned to routes that do not coincide with each other over the signal line (38).

4. The apparatus according to claim 1, **characterized in that** the access control means (28) checks a use state of the signal line (38) periodically when it is checked that the storage medium control interface (30) uses the signal line (38).

5. The apparatus according to claim 1, **characterized in that** the semiconductor memory control interface (32) and the storage medium control interface (30) are housed in a single device (22).

6. The apparatus according to claim 5, **characterized in that** the device has a shared connector (38a) for connecting to the shared signal line (38).

7. The apparatus according to claim 5, **characterized in that** the device (22) is capable of inserting a memory card (36) and a floppy disk (34) therein.

8. A storage medium control method in an information processing apparatus using a semiconductor memory control interface (32) and a storage medium control interface (30) different from the semiconductor memory control interface (32), the method comprising:
storing a state indicating which one of the storage medium control interface (30) and the semiconductor memory control interface (32) holds a privilege of using a signal line (38), the signal line (38) being shared by the semiconductor memory control interface (32) and the storage medium control interface (30); and
electrically disconnecting a connection between the signal line (38) and any one of the interfaces (30, 32) according to the state stored;
**characterized by** further comprising:
checking whether the storage medium control interface (30) uses the signal line (38) by referring a state stored in the state storage means (44) before providing access to the semiconductor memory control interface (32), and
causing the system to wait until the signal line (38) is released when the storage medium control interface (30) uses the signal line (38).

9. The method according to claim 8, **characterized by** further comprisng:
setting the privilege of using the signal line (38) to anyone of the storage medium control interface (30) and the semiconductor memory control interface (32).

10. The method according to claim 8, **characterized by** further comprising:
assigning select signals used in the storage medium control interface (30) and the semiconductor memory control interface (32) to routes that do not coincide with each other over the signal line (38).

11. The method according to claim 8, **characterized by** further comprising:
checking a use state of the signal line (38) periodically when it is checked that the storage medium control interface (30) uses the signal line (38).

## Patentansprüche

1. Informationsverarbeitungsvorrichtung mit einer Halbleiterspeicher-Steuerschnittstelle (32) und einer Speichermedium-Steuerschnittstelle (30), die sich von der Halbleiterspeicher-Steuerschnittstelle (32) unterscheidet, wobei die Vorrichtung umfasst:
eine Signalleitung (38), die durch die Halbleiterspeicher-Steuerschnittstelle (32) und die Speichermedium-Steuerschnittstelle (30) gemeinsam genutzt wird;
ein Mittel (44) zum Speichern eines Zustands, der angibt, ob die Speichermedium-Steuerschnittstelle (30) oder die Halbleiterspeicher-Steuerschnittstelle (32) ein Privileg zum Verwenden der Signalleitung (38) hält; und
ein Mittel (28) zum Steuern einer Verbindung zwischen der Signalleitung (38) und einer der Schnittstellen (30, 32), um gemäß einem durch das Zustandsspeichermittel gespeicherten Zustand elektrisch getrennt zu werden; und
ferner **gekennzeichnet durch**:
ein Zugriffssteuermittel (28) zum Prüfen, ob die Speichermedium-Steuerschnittstelle (30) die Signalleitung (38) verwendet, indem auf einen Zustand Bezug genommen wird, der in dem Zustandsspeichermittel (44) gespeichert ist, bevor Zugriff auf die Halbleiterspeicher-Steuerschnittstelle (32) bereitgestellt wird, und zum Bewirken, dass das System wartet, bis die Signalleitung (38) freigegeben wird, wenn die Speichermedium-Steuerschnittstelle (30) die Signalleitung (38) verwendet.

2. Vorrichtung gemäß Anspruch 1, ferner **gekennzeichnet durch**:
ein Befehlsspeichermittel (46) zum Schreiben eines Befehls zum Einstellen des Privilegs zum Verwenden der Signalleitung (38) auf entweder die Speichermedium-Steuerschnittstelle (30) oder die Halbleiterspeicher-Steuerschnittstelle (32); und
ein Mittel (40, 42) zum Einstellen des Privilegs des Verwendens der Signalleitung (38) **durch** Schreiben eines Befehls in das Befehlsspeichermittel.

3. Vorrichtung gemäß Anspruch 1, **dadurch gekennzeichnet, dass** die Speichermedium-Steuerschnittstelle (30) und die Halbleiterspeicher-Steuerschnittstelle (32) Auswahlsignale verwenden, die Routen zugewiesen sind, die über die Signalleitung (38) nicht miteinander koinzidieren.

4. Vorrichtung gemäß Anspruch 4, **dadurch gekennzeichnet, dass** das Zugriffssteuermittel (28) einen Verwendungszustand der Signalleitung (38) periodisch prüft, wenn geprüft ist, dass die Speichermedium-Steuerschnittstelle (30) die Signalleitung (38) verwendet.

5. Vorrichtung gemäß Anspruch 1, **dadurch gekennzeichnet, dass** die Halbleiterspeicher-Steuerschnittstelle (32) und die Speichermedium-Steuerschnittstelle (30) in einer einzelnen Einrichtung (22) untergebracht sind.

6. Vorrichtung gemäß Anspruch 5, **dadurch gekennzeichnet, dass** die Vorrichtung einen gemeinsam genutzten Verbinder (38a) zum Verbinden mit der gemeinsam genutzten Signalleitung (38) aufweist.

7. Vorrichtung gemäß Anspruch 5, **dadurch gekennzeichnet, dass** die Einrichtung (22) im Stande ist, eine Speicherkarte (36) und eine Diskette (34) aufzunehmen.

8. Speichermedium-Steuerverfahren in einer Informationsverarbeitungsvorrichtung mit einer Halbleiterspeicher-Steuerschnittstelle (32) und einer Speichermedium-Steuerschnittstelle (30), die sich von der Halbleiterspeicher-Steuerschnittstelle (32) unterscheidet, wobei das Verfahren umfasst:
Speichern eines Zustands, der angibt, ob die Speichermedium-Steuerschnittstelle (30) oder die Halbleiterspeicher-Steuerschnittstelle (32) ein Privileg zum Verwenden einer Signalleitung (38) hält, wobei die Signalleitung (38) durch die Halbleiterspeicher-Steuerschnittstelle (32) und die Speichermedium-Steuerschnittstelle (30) gemeinsam benutzt wird; und
elektrisches Trennen einer Verbindung zwischen der Signalleitung (38) und einer der Schnittstellen (30, 32) gemäß dem gespeicherten Zustand;
ferner **gekennzeichnet durch**:
Prüfen, ob die Speichermedium-Steuerschnittstelle (30) die Signalleitung (38) verwendet, indem auf den gespeicherten Zustand Bezug genommen wird, bevor Zugriff auf die Halbleiterspeicher-Steuerschnittstelle (32) bereitgestellt wird; und
Bewirken, dass das System wartet, bis die Signalleitung (38) freigegeben wird, wenn die Speichermedium-Steuerschnittstelle (30) die Signalleitung (38) verwendet.

9. Verfahren gemäß Anspruch 8, ferner **gekennzeichnet durch**:
Einstellen des Privilegs des Verwendens der Signalleitung (38) auf entweder der Speichermedium-Steuerschnittstelle (30) oder der Halbleiterspeicher-Steuerschnittstelle (32).

10. Verfahren gemäß Anspruch 8, ferner **gekennzeichnet durch**:
Zuweisen von Auswahlsignalen, die bei der Speichermedium-Steuerschnittstelle (30) und der Halbleiterspeicher-Steuerschnittstelle (32) verwendet werden, zu Routen die über die Signalleitung (38) nicht miteinander koinzidieren.

11. Verfahren gemäß Anspruch 8, ferner **gekennzeichnet durch**:
periodisches Prüfen eines Verwendungszustands der Signalleitung (38), wenn geprüft ist, dass die Speichermedium-Steuerschnittstelle (30) die Signalleitung (38) verwendet.

## Revendications

1. Dispositif de traitement d'informations utilisant une interface de commande de mémoire à semiconducteur (32) et une interface de commande de support de mémorisation (30) différente de l'interface de commande de mémoire à semiconducteur (32), le dispositif comprenant :
une ligne de signaux (38) partagée par l'interface de commande de mémoire à semiconducteur (32) et l'interface de commande de support de mémorisation (30),
un moyen (44) destiné à mémoriser un état indiquant laquelle de l'interface de support de mémorisation (30) et de l'interface de commande de mémoire à semiconducteur (32) détient un privilège d'utilisation de la ligne de signaux (38), et
un moyen (28) destiné à commander une connexion entre la ligne de signaux (38) et l'une quelconque des interfaces (30, 32) pour qu'elles soient électriquement déconnectées conformément à un état mémorisé par le moyen de mémorisation d'état.
**caractérisé par** le fait de comprendre en outre :
un moyen de commande d'accès (28) destiné à contrôler si l'interface de commande de support de mémorisation (30) utilise la ligne de signaux (38) en faisant référence à un état mémorisé dans le moyen de mémorisation d'état (44) avant de fournir un accès à l'interface de commande de mémoire à semiconducteur (32), et à amener le système à attendre jusqu'à ce que la ligne de signaux (38) soit libérée lorsque l'interface de commande de support de mémorisation (30) utilise la ligne de signaux (38).

2. Dispositif selon la revendication 1, **caractérisé par** le fait de comprendre en outre :
un moyen de mémorisation d'instruction (46) destiné à écrire une instruction destinée à établir le privilège d'utilisation de la ligne de signaux (38) pour l'une quelconque de l'interface de commande de support de mémorisation (30) et de l'interface de commande de mémoire à semiconducteur (32), et
un moyen (40, 42) destiné à établir le privilège d'utilisation de la ligne de signaux (38) par le biais d'une instruction écrivant dans le moyen de mémorisation d'instruction.

3. Dispositif selon la revendication 1, **caractérisé en ce que** l'interface de commande de support de mémorisation (30) et l'interface de commande de mémoire à semiconducteur (32) utilisent les signaux sélectionnés affectés à des itinéraires qui ne coïncident pas l'un avec l'autre sur la ligne de signaux (38).

4. Dispositif selon la revendication 1, **caractérisé en ce que** le moyen de commande d'accès (28) contrôle un état d'utilisation de la ligne de signaux (38) périodiquement lorsqu'il est contrôlé que l'interface de commande de support de mémorisation (30) utilise la ligne de signaux (38).

5. Dispositif selon la revendication 1, **caractérisé en ce que** l'interface de commande de mémoire à semiconducteur (32) et l'interface de commande de support de mémorisation (30) sont logées dans un seul dispositif (22).

6. Dispositif selon la revendication 5, **caractérisé en ce que** le dispositif comporte un connecteur partagé (38a) destiné à se connecter à la ligne de signaux partagée (38).

7. Dispositif selon la revendication 5, **caractérisé en ce que** le dispositif (22) accepte l'insertion d'une carte mémoire (36) et d'un disque souple (34) dans celui-ci.

8. Procédé de commande de support de mémorisation dans un dispositif de traitement d'informations utilisant une interface de commande de mémoire à semiconducteur (32) et une interface de commande de support de mémorisation (30) différente de l'interface de commande de mémoire à semiconducteur (32), le procédé comprenant les étapes consistant à :
mémoriser un état indiquant quelle interface parmi l'interface de commande de support de mémorisation (30) et l'interface de commande de mémoire à semiconducteur (32) détient un privilège d'utilisation d'une ligne de signaux (38), la ligne de signaux (38) étant partagée par l'interface de commande de mémoire à semiconducteur (32) et l'interface de commande de support de mémorisation (30), et
déconnecter électriquement une connexion entre la ligne de signaux (38) et l'une quelconque des interfaces (30, 32) conformément à l'état mémorisé,
**caractérisé par** le fait de comprendre en outre les étapes consistant à :
contrôler si l'interface de commande de support de mémorisation (30) utilise la ligne de signaux (38) en faisant référence à un état mémorisé dans le moyen de mémorisation d'état (44) avant de fournir un accès à l'interface de commande de mémoire à semiconducteur (32), et
amener le système à attendre jusqu'à ce que la ligne de signaux (38) soit libérée lorsque l'interface de commande de support de mémorisation (30) utilise la ligne de signaux (38).

9. Procédé selon la revendication 8, **caractérisé par** le fait de comprendre en outre l'étape consistant à :
établir le privilège d'utilisation de la ligne de signaux (38) pour l'une quelconque de l'interface de commande de support de mémorisation (30) et de l'interface de commande de mémoire à semiconducteur (32).

10. Procédé selon la revendication 8, **caractérisé par** le fait de comprendre en outre l'étape consistant à :
affecter les signaux de sélection utilisés dans l'interface de commande de support de mémorisation (30) et l'interface de commande de mémoire à semiconducteur (32) pour des itinéraires qui ne coïncident pas l'un avec l'autre sur la ligne de signaux (38).

11. Procédé selon la revendication 8, **caractérisé par** le fait de comprendre en outre l'étape consistant à :
contrôler un état d'utilisation de ligne de signaux (38) périodiquement lorsqu'il est contrôlé que l'interface de commande de support de mémorisation (30) utilise la ligne de signaux (38).
